# DEMANDE DE BREVET EUROPEEN

(11) **EP 2 937 125 A1**
(43) Date de publication de la demande: **28.10.2015**
(21) Numéro de dépôt: 14352001.3
(22) Date de dépôt: 23.04.2014
(51) Int. Cl.: B01D 9/00, B01D 9/04, C02F 1/22, C02F 103/08

(54) **Procédé de traitement d'une solution aqueuse contenant des matières dissoutes par cristallisation de clathrates hydrates**

(71) Demandeur: BGH, 64170 Lacq (FR)
(72) Inventeur: Mottet, Bruno, 56520 Guidel (FR)
(74) Mandataire: Audier, Philippe André

(57) **Abrégé**

Procédé de traitement d'une solution aqueuse contenant des matières dissoutes susceptibles de cristalliser par cristallisation de clathrates hydrates d'une molécule hôte qui cristallisent à la pression atmosphérique à des températures supérieures à la température de cristallisation de la glace.

Ce procédé permet de produire simultanément de l'eau purifiée et des matières solides ou des solutions très concentrées en matières dissoutes.

Installation pour la mise en oeuvre de ce procédé.

## Description

### DOMAINE TECHNIQUE

L'invention a trait à un procédé de traitement d'une solution aqueuse contenant des matières dissoutes par cristallisation de clathrates hydrates.

Plus précisément, l'invention a trait à un procédé de traitement d'une solution aqueuse contenant des matières dissoutes susceptibles de cristalliser (cristallisables), par cristallisation de clathrates hydrates d'une molécule hôte qui cristallisent à la.pression atmosphérique à des températures supérieures à la température de cristallisation de la glace.

Le procédé selon l'invention permet de produire simultanément de l'eau purifiée et des matières solides ou des solutions très concentrées en matières dissoutes:

### ÉTAT DE LA TECHNIQUE ANTÉRIEURE

Le traitement des solutions riches en matières dissoutes est un enjeu tant économique qu'environnemental.

De très nombreuses industries sont confrontées à cette problématique que ce soit pour récupérer des matières premières dissoutes valorisables à l'état solide ou sous la forme de solutions hautement concentrées, pour pouvoir recycler des eaux polluées ou contaminées, pour rejeter des eaux polluées ou contaminées répondant aux normes environnementales, ou encore pour produire une eau purifiée.

Les techniques pour réaliser le traitement de ces solutions riches en matières dissoutes sont classées en fonction de la teneur en matières dissoutes des solutions à traiter et en fonction des rendements de purification attendus.

On distingue aujourd'hui deux grandes familles de techniques pour réaliser le traitement des solutions riches en matières dissoutes.

Les premières de ces techniques sont les techniques destinées au traitement des solutions ayant des teneurs en matières dissoutes inférieures à 50 000 ppm.

Il s'agit des techniques membranaires et principalement de l'osmose inverse.

L'osmose inverse présente de faibles coûts d'exploitation (OPEX) et permet une purification poussée de l'eau, mais son rendement est faible, généralement inférieur à 50%.

De plus au-delà de 50 000 ppm, ces techniques physiques de purification sont confrontées à deux types de problèmes, à savoir les problèmes de colmatage -car la précipitation des sels colmate les pores des membranes- et les problèmes dus aux hautes pressions nécessaires à la compensation des pressions osmotiques élevées des solutions présentant une forte concentration en matières dissoutes.

Au-delà de 50 000 ppm en matières dissoutes, les techniques membranaires deviennent techniquement complexes et ne sont plus économiquement compétitives.

Les secondes de ces techniques sont les techniques destinées au traitement des solutions ayant des teneurs élevées en matières dissoutes, supérieures à 40 000 ppm.

Il s'agit essentiellement des techniques d'évaporation.

Dans ces techniques, on chauffe la solution pour « extraire » l'eau sous forme de vapeur et concentrer ainsi la solution. L'eau purifiée est récupérée par condensation en fin de procédé.

Ces techniques d'évaporation ont un rendement élevé, par exemple supérieur à 85% et permettent d'obtenir une eau de pureté élevée.

Cependant, ces techniques d'évaporation se heurtent à trois problèmes.

Le premier problème est d'ordre économique puisque la vaporisation de l'eau nécessite beaucoup d'énergie, soit environ 2 257 kJ/kg, ce qui entraîne donc des coûts d'investissement (CAPEX) importants, et des coûts d'exploitation (OPEX) élevés du fait de cette forte consommation énergétique.

Le deuxième problème est l'entartrage et la corrosion en relation avec le système de chauffe et à la température élevée du traitement.

Enfin, le troisième problème provient du fait que, selon la nature des espèces dissoutes, certains composés (notamment organiques ou ammoniaqués) peuvent également être vaporisés lors du traitement à température élevée et viennent ainsi polluer l'eau récupérée.

Afin de surmonter les problèmes que présentent les techniques membranaires et les techniques d'évaporation, une nouvelle technologie dénommée *« Eutectic Freeze Crystallization* » (« *EFC* » ou *« Ice EFC »)* a été développée dans les années 2000 par l'Université Technologique de Delft aux Pays-Bas et a fait l'objet de la demande WO-Al-01/28958.

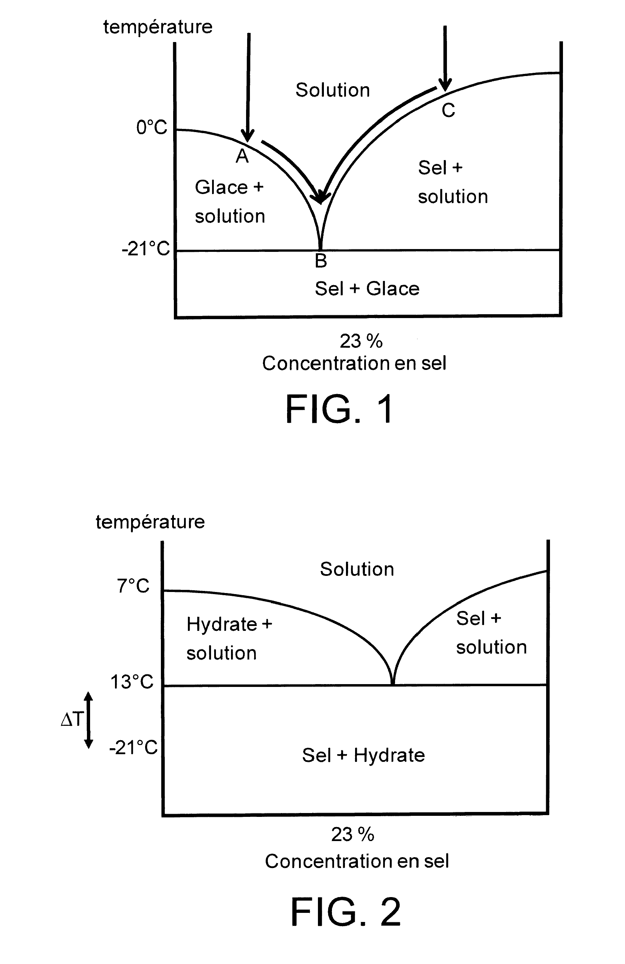

Cette technique de EFC met en oeuvre les cristallisations concomitantes de la glace et de sels à des températures eutectiques. Ces températures sont généralement négatives, par exemple la température de l'eutectique est de -21°C pour une solution de NaCl (voir Figure 1).

La glace est cristallisée de manière indirecte par des surfaces froides. Les cristaux de glace sont récupérés mécaniquement sur les surfaces froides, alors que les cristaux de sels décantent dans le réacteur. La glace pure étant moins dense que la solution, les cristaux de glace flottent à la surface de la solution. Les sels sont filtrés, la glace est récoltée avant d'être lavée et fondue pour récupérer une eau purifiée.

Par rapport aux techniques membranaires et aux techniques d'évaporation décrites plus haut, cette technique d'EFC, présente le triple avantage de ne pas être limitée par la concentration initiale en matières dissoutes, d'avoir une demande énergétique moindre compte tenu de la chaleur latente de cristallisation de la glace qui est de 333 kJ/kg, et d'éviter l'ensemble des problèmes liés à la mise en oeuvre de températures élevées.

Cette technique présente cependant deux inconvénients qui handicapent lourdement son développement industriel.

Le premier inconvénient est lié à la technique de cristallisation de la glace.

Le froid est en effet transmis par des surfaces froides qui constituent le point froid du système et qui sont le lieu privilégié de la cristallisation des cristaux de glace.

Pour être ensuite arrachés des surfaces froides, et surnager dans la solution, ces cristaux de glace doivent être récoltés mécaniquement par raclage des surfaces froides.

Les dispositifs de raclage subissent une usure mécanique importante, ce qui occasionne des coûts d'entretien élevés pour les maintenir en fonctionnement et éviter toute prise en masse qui serait catastrophique.

Enfin, la croissance cristalline de la glace est difficilement maîtrisable. L'ensemble de l'eau du système étant soumis à des conditions thermodynamiques de cristallisation, les cristaux développent des morphologies dites « dendritiques », dues à une croissance anisotrope. De tels cristaux sont susceptibles de piéger de nombreuses inclusions de liquides, ou de servir de support de nucléation pour les sels comme cela est exposé dans le document de Willem van der Tempel, Master Thesis Delft University of Technology, « Eutectic Freeze Crystallization : Separation of Salt and lce », juin 2012. Il en résulte d'importants problèmes de séparation et de flottation des cristaux de glace « impure» qui ont alors une densité, supérieure à la densité de la glace pure, qui ne leur permet pas de flotter en surface de la solution. Enfin, la fusion de ces cristaux de glace « impure » donne une eau encore chargée en matière dissoute.

Il existe donc un besoin pour un procédé qui, tout en présentant les avantages du procédé de *« Eurectic Freeze Crystallization* » n'en présente pas les inconvénients dus notamment à la cristallisation de la glace et à sa récupération.

Par ailleurs, on connaît les clathrates hydrates qui sont des composés cristallins constitués par une cage formée de molécules d'eau piégeant en leur coeur une molécule dite « molécule hôte » stabilisant l'édifice.

De très nombreuses molécules hôtes permettent de cristalliser des clathrates hydrates. Nous citerons entre autres : N₂, CO_{b} Ar, H₂S, Kr, Xe, CH₃CC1₂F, CH₃CCIF₂, CH₃CHF₂, CHCIF₂, C₃H₆, CH₂CCIF, CH₃CI, le méthane, l'éthane, le butane, le propane, le cyclopentane, et certains sels d'ammonium quaternaires.

Lorsque la molécule hôte est une molécule à l'état gazeux, ces clathrates hydrates sont communément appelés « *Gaz Hydrates* ».

Les conditions de pression et de température auxquelles se formeront ces différents clathrates hydrates en solution dépendent de la nature de la molécule hôte et des espèces dissoutes dans la solution.

Le nombre de molécules d'eau associé à chaque molécule hôte dépend également de la nature des molécules hôtes.

En solution saline et à des températures adaptées, la cristallisation des clathrates hydrates est sujette au même phénomène d'eutectique que la glace.

Cependant, la température de l'eutectique d'une solution saline, par exemple d'une solution saline de NaCl, contenant un clathrate hydrate d'une molécule hôte est supérieure à la température de l'eutectique de cette même solution ne contenant pas de clathrates hydrates, comme de la même manière, la température de cristallisation d'un clathrate hydrate donné est inférieure à la température de cristallisation de la glace (voir Figure 1 et Figure 2).

Les deux documents étudiés plus bas exposent des procédés de traitement de solutions salines à l'aide de clathrates hydrates.

Le document WO-A1-2005/000746 (US-B2-7,794,603) décrit un procédé de purification d'une eau contaminée, par formation d'hydrates et séparation des hydrates de l'eau contaminée enrichie en contaminants dans lequel des particules d'hydrate sont ajoutées à l'eau pendant que les hydrates se forment.

L'eau contaminée peut être notamment une phase aqueuse provenant de l'exploitation du pétrole, et les contaminants peuvent être notamment des hydrocarbures, ou des sels comme le NaCl.

Les contaminants séparés sont ensuite traités par exemple en les recyclant ou en les rejetant.

Plus précisément, ce procédé comprend les étapes d'addition d'un composé formant des hydrates (molécule hôte), et de germes d'hydrates à l'eau, la formation des hydrates dans des conditions adéquates de température et de pression, la récupération des hydrates à partir de l'eau contaminée, et la dissociation des hydrates en eau pure et en molécule hôte.

Les molécules hôtes peuvent être choisies parmi les hydrocarbures inférieurs, le CO₂, les hydrocarbures halogénés, le tetrahydrofuranne, l'oxyde d'éthylène, les gaz rares, l'hexafluorure de soufre, le N₂O. De préférence, les molécules hôtes sont choisies parmi les hydrocarbures en C1 à C5 -il s'agit donc d'hydrocarbures linéaires ou ramifiés et non cycliques- ou le CO₂, de préférence encore parmi le méthane, l'éthane, le propane, et le CO₂. Les molécules hôtes préférées entre toutes sont le méthane ou le CO₂. Il est à noter que le cyclopentane n'est pas cité.

Selon la revendication 10, la pression utilisée est supérieure à la pression atmosphérique. Dans les tableaux 2, 3, et 4, les molécules hôtes sont des molécules gazeuses à savoir le CO₂, le méthane ou l'éthane et les pressions mises en oeuvre qui sont nécessaires pour qu'un hydrate se forme sont très nettement supérieures à la pression atmosphérique.

Le procédé de ce document met donc essentiellement en oeuvre des molécules hôtes gazeuses qui présentent l'inconvénient de nécessiter des pressions élevées.

Le procédé de ce document a essentiellement pour but de purifier l'eau et ne s'intéresse absolument pas à la valorisation des concentrâts. Il n'y a aucune mention dans ce document d'une récupération des matières dissoutes sous forme solide ni d'une quelconque modulation de la concentration des concentrâts en fonction des différentes voies de valorisation.

En d'autres termes, le seul produit fourni par ce procédé est de l'eau pure.

Le procédé de ce document ne peut traiter des eaux contaminées dont la teneur en contaminants tels que des sels excède 25% en poids. En effet, ce procédé met essentiellement en oeuvre des hydrates de gaz comme le CO₂ qui sont plus denses que le l'eau, et de ce fait les hydrates ne peuvent donc être séparés des contaminants tels que des sels.

Le document US-B2-8,454,926 décrit un procédé et un système pour séparer un soluté à partir d'une solution aqueuse dans lequel :
- une première solution aqueuse saturée en un soluté qui est un sel tel que le chlorure de sodium, est mise en contact avec un agent de formation de clathrates (molécule hôte) dans des conditions permettant la formation de clathrates et la précipitation du soluté à partir de la première solution aqueuse ;
- on sépare le soluté précipité des clathrates en soutirant un premier courant comprenant les clathrates et le soluté, et en soutirant un deuxième courant comprenant le soluté précipité ;
- on décompose les clathrates en la molécule hôte et en une deuxième solution aqueuse comprenant le soluté à une concentration inférieure à la concentration du soluté dans la première solution aqueuse ; et
- on recycle la deuxième solution aqueuse en mettant en contact la deuxième solution aqueuse avec une source de soluté pour former une troisième solution aqueuse qui est utilisée en tant que première solution aqueuse ou en en combinaison avec celle-ci.

Les molécules hôtes sont notamment des gaz de faible masse moléculaire comme l'oxygène, l'azote, le CO₂, le H₂S, l'argon, le krypton et le Xénon ou encore des hydrocarbures halogénés, ou des hydrocarbures gazeux comme le méthane, le propane, l'éthane et le butane. Les hydrocarbures cycliques tels que le cyclopentane ne sont pas cités.

Les molécules hôtes gazeuses présentent l'inconvénient majeur de nécessiter des pressions élevées.

Le procédé de ce document a essentiellement pour but de produire, de cristalliser, du sel de pureté élevée à partir de saumures issues de mines de sel.

Il n'y a aucune mention dans ce document que l'on récupère aussi de l'eau pure.

En d'autres termes, le seul produit fourni par ce procédé est du sel.

Il existe donc au regard de ce qui précède un besoin pour un procédé de traitement d'une solution aqueuse contenant des matières dissoutes susceptibles de cristalliser, par cristallisation de clathrates hydrates qui ne présente pas les inconvénients, défauts et désavantages des procédés de traitement de solutions salines à l'aide de clathrates hydrates décrits dans les documents WO-A1-2005/000746 (US-B2-7,794,603) et US-B2-8,454,926 et qui surmonte les problèmes des procédés de ces documents.

Le but de la présente invention est de répondre entre autres à ce besoin.

### EXPOSÉ DE L'INVENTION

Ce but, et d'autres encore, sont atteints, conformément à l'invention par un procédé de traitement d'une solution aqueuse contenant des matières dissoutes susceptibles de cristalliser ou de précipiter (c'est-à-dire cristallisables, précipitables), par cristallisation de clathrates hydrates d'une molécule hôte qui cristallisent à la pression atmosphérique à des températures supérieures à la température de cristallisation de la glace (eau solide), lesdits clathrates hydrates étant moins denses que ladite solution aqueuse contenant des matières dissoutes, dans lequel on réalise les étapes suivantes :
a) on refroidit la solution aqueuse à une température T1 supérieure à la température de cristallisation de la glace et inférieure à la température de cristallisation Teq des clathrates hydrates, et on introduit cette solution aqueuse refroidie dans un réacteur isolé thermiquement ;
b) on ajoute dans le réacteur contenant la solution aqueuse refroidie, une quantité de la molécule hôte telle que la température T2 de la solution aqueuse reste, suite à cette addition et au dégagement exothermique dû à la cristallisation des clathrates hydrates, inférieure à la température Teq, moyennant quoi les clathrates hydrates de la molécule hôte cristallisent de manière homogène dans l'ensemble du volume de la solution aqueuse en formant une suspension de clathrates hydrates cristallisés dans une solution aqueuse concentrée en matières dissoutes pouvant éventuellement contenir en outre des matières dissoutes cristallisées ou précipitées (par exemple si l'on est à l'eutectique) ;
c) on prélève dans le réacteur la suspension formée lors de l'étape b), et on envoie ladite suspension dans un décanteur où elle est séparée en une solution aqueuse concentrée en matières dissoutes et exempte de clathrates hydrates, en une suspension de clathrates hydrates cristallisés sous forme de sorbet (hydrate cristallisé dans une solution concentrée) dans une solution aqueuse concentrée en matières dissoutes et exempte de matières dissoutes cristallisées ou précipitées, et éventuellement en une suspension sursaturée contenant des matières dissoutes cristallisées ou précipitées et exempte de clathrates hydrates dans une solution aqueuse concentrée en matières dissoutes ;
d) on soutire à partir du décanteur d'une part la solution aqueuse concentrée en matières dissoutes et exempte de clathrates hydrates, et éventuellement d'autre part (par exemple si l'on se trouve dans des conditions eutectiques), la suspension sursaturée contenant des matières dissoutes cristallisées ou précipitées et exempte de clathrates hydrates ;
e) la solution aqueuse concentrée en matières dissoutes et exempte de clathrates hydrates soutirée dans l'étape d), est renvoyée en totalité dans le réacteur après avoir été éventuellement refroidie ; ou bien, s'il n'existe pas dans le décanteur de suspension sursaturée alors une partie de la solution aqueuse concentrée en matières dissoutes et exempte de clathrates hydrates soutirée dans l'étape d), est renvoyée dans le réacteur après avoir été éventuellement refroidie, et une autre partie de la solution aqueuse concentrée en matières dissoutes et exempte de clathrates hydrates soutirée dans l'étape d), est récupérée et/ou rejetée par l'intermédiaire d'une purge ;
f) la suspension de clathrates hydrates cristallisés sous forme de sorbet dans une solution aqueuse concentrée en matières dissoutes et exempte de matières dissoutes cristallisées ou précipitées obtenue dans l'étape c), est envoyée dans un appareil de séparation liquide/solide, tel qu'un filtre, où des clathrates hydrates solides sont séparés de la solution aqueuse concentrée en matières dissoutes et exempte de matières dissoutes cristallisées ou précipitées (filtrat) qui est recyclée pour former au moins une partie de la solution aqueuse refroidie dans l'étape a) ;
g) on envoie les clathrates hydrates solides séparés dans l'étape f) dans un réacteur de dissociation des clathrates hydrates dans lequel les clathrates hydrates se dissocient en eau purifiée et en molécules hôtes ;
h) l'eau purifiée et les molécules hôtes obtenues dans l'étape g) sont séparées, l'eau purifiée est récupérée et les molécules hôtes sont recyclées dans l'étape b).

Le procédé selon l'invention présente une combinaison spécifique d'étapes spécifiques-qui n'a jamais été décrite ou suggérée dans l'art antérieur tel que représenté notamment par les documents étudiés plus haut.

Le procédé selon l'invention permet d'obtenir d'une part une eau purifiée et d'autre part des matières dissoutes sous forme valorisable, soit sous la forme d'une solution très concentrée soit sous la forme d'un solide, en mettant à profit la cristallisation des molécules d'eau sous la forme de clathrates hydrates et non pas de glace.

Dans les procédés de l'art antérieur exposés plus haut qui mettent en oeuvre des clathrates hydrates, on obtient soit uniquement de l'eau pure, soit uniquement des sels. Au contraire, le procédé selon l'invention permet pour la première fois, en utilisant des clathrates hydrates d'obtenir à la fois, simultanément, de l'eau d'une grande pureté et des matières dissoutes potentiellement valorisables. Selon un autre avantage du procédé selon l'invention, la concentration et/ou la forme -liquide ou solide- des matières dissoutes récupérées potentiellement valorisables peut être facilement modulée.

En d'autres termes, le procédé selon l'invention agit à la fois comme un purificateur d'eau et comme un concentrateur de matières dissoutes.

En particulier, le procédé selon l'invention se distingue fondamentalement des procédés de l'art antérieur notamment par les étapes a) et b), ainsi que c), d), et e).

Dans le procédé selon l'invention, la phase de refroidissement (étape a)) est dissociée séparée, distincte de la phase de cristallisation des molécules d'eau (étape b)) et les molécules d'eau cristallisent sous la forme de clathrate hydrate et non plus de glace comme par exemple dans le procédé du document WO-Al-01/28958.

Cette cristallisation se produit lors de l'addition de la molécule hôte à la solution aqueuse refroidie. Cette cristallisation se produit de manière interne, directe, homogène, dans l'ensemble du volume de la solution aqueuse contenue dans le réacteur, uniformément refroidie au préalable, et non pas seulement dans des volumes limités de cette solution, progressivement refroidis de manière indirecte par des surfaces froides.

La récupération des cristaux de clathrates est de ce fait bien plus facile car on évite tous les problèmes liés au raclage mécanique des surfaces.

Selon l'invention, la phase de cristallisation de l'eau sous la forme de clathrates hydrates au coeur de la solution aqueuse, dans l'ensemble du volume de la solution aqueuse permet d'éviter les problèmes de croissance dendritique et de piégeage d'inclusions de matières dissoutes par exemple d'inclusions salines dans les cristaux de clathrates hydrates. Une eau purifiée de grande qualité peut être ainsi produite.

Le procédé selon l'invention se distingue aussi des procédés de l'art antérieur et notamment du procédé du document WO-A1-2005/000746 (US-B2-7,794,603) par la mise en oeuvre de l'étape c) puis de l'étape d) au cours desquelles on prélève dans le réacteur la suspension formée lors de l'étape b), on envoie ladite suspension dans un décanteur où elle est séparée en une solution aqueuse concentrée en matières dissoutes et exempte de clathrates hydrates, en une suspension de clathrates hydrates cristallisés sous forme de sorbet (hydrate cristallisé dans solution concentrée) dans une solution concentrée en matières dissoutes et exempte de matières dissoutes cristallisées ou précipitées, et éventuellement en une suspension sursaturée contenant des matières dissoutes cristallisées ou précipitées et exempte de clathrates hydrates ; et ensuite on soutire à partir du décanteur la solution aqueuse concentrée en matières dissoutes et exempte de clathrates hydrates, et éventuellement la suspension sursaturée contenant des matières dissoutes cristallisées ou précipitées et exempte de clathrates hydrates.

Le procédé selon l'invention se distingue, en outre, des procédés de l'art antérieur et notamment du procédé du document WO-Al-2005/000746 par la mise en oeuvre d'une étape e) suite à l'étape c) et à l'étape d), au cours de laquelle la solution aqueuse concentrée en matières dissoutes et exempte de clathrates hydrates soutirée dans l'étape d), est envoyée dans le réacteur.

L'étape e) permet d'atteindre l'eutectique ou de maintenir la sursaturation dans la boucle de cristallisation (c'est-à-dire le circuit comprenant le réacteur, le décanteur et éventuellement un échangeur thermique dans lequel circule entre le réacteur et le décanteur la suspension formée dans l'étape b) puis entre le décanteur et le réacteur la solution aqueuse concentrée en matières dissoutes et exempte de clathrates hydrates soutirée dans l'étape d)) pour faire cristalliser ou précipiter les sels dans le décanteur, et pour obtenir ainsi (lorsque l'on atteint l'eutectique) la suspension sursaturée contenant des matières dissoutes cristallisées ou précipitées et exempte de clathrates hydrates.

Il est à noter que, lors de l'étape b), la cristallisation est réalisée en milieu dynamique, agité dans le réacteur, et qu'il n'y a généralement pas de séparation des matières dissoutes, cristallisées, précipitées, lors de cette étape.

Cependant, il n'est pas totalement exclus qu'une telle séparation, décantation des matières dissoutes, cristallisées précipitées telles que des sels se produise dans le réacteur, auquel cas ces matières dissoutes cristallisées, précipitées, décantées peuvent être soutirées du réacteur par l'intermédiaire d'une purge, prévue dans le réacteur, généralement dans sa partie basse.

Ce phénomène de séparation, décantation des matières dissoutes cristallisées, précipitées, dans le réacteur est notamment lié à des paramètres tels que la dimension du réacteur.

La séparation se fait par contre généralement dans le décanteur en milieu non agité, ou en tous cas moins agité que dans le réacteur.

Dans le procédé selon l'invention, il est en outre possible de mettre à profit les conditions thermodynamiques avantageuses de la cristallisation de certains clathrates hydrates tels que les clathrates hydrates dans lesquels Ia molécule hôte est le cyclopentane pour diminuer la demande énergétique (moins de froid) par rapport aux procédés qui font appel à la cristallisation de la glace.

En d'autres termes, les avantages du procédé selon l'invention peuvent être ainsi énumérés :
- production simultanée de matières dissoutes telles que des sels et d'eau pure et donc aucun rejet, le procédé selon l'invention peut être qualifié de « procédé zéro rejet » ;
- recyclage et valorisation des matières dissoutes solides telles que des sels, ou de concentrâts ;
- rendement élevé, par exemple supérieur à 95% ;
- concentrations élevées des solutions qui ne peuvent être traitées directement par les techniques membranaires (RO) ;
- procédé opérant à la pression atmosphérique et à des températures raisonnables, par exemple de -20 °C à 7°C ;
- procédé consommant beaucoup moins d'énergie que les procédés d'évaporation. En effet, l'enthalpie de vaporisation de l'eau, qui est de 2257 kJ/kg est bien plus élevée que l'enthalpie de cristallisation des clathrates hydrates qui est seulement de 284 kJ/kg pour le clathrate hydrate de cyclopentane ;
- procédé stable, notamment lorsqu'il fonctionne à la température et à la concentration eutectiques ;
- procédé consommant moins d'énergie que le procédé «*Ice EFC* » du document WO-AI-01/28958, car les températures des eutectiques avec les solutions de clathrates hydrates sont plus élevées et qu'il est donc nécessaire d'apporter moins de froid ;
- procédé techniquement plus fiable que le procédé « *Ice EFC* » car la cristallisation de l'eau est interne et directe lors de l'apport de la molécule hôte, telle que le cyclopentane, et qu'il n'existe pas de surface raclée.

Avantageusement, le procédé selon l'invention est réalisé en continu.

Les matières dissoutes susceptibles de cristalliser ou de précipiter (cristallisables, précipitables) peuvent être choisies parmi les sels minéraux tels que NaCl, les sels organiques, et les composés solubles dans l'eau présentant un eutectique de cristallisation en solution aqueuse, et ayant de préférence une densité supérieure à celle de la solution aqueuse contenant des matières dissoutes traitée, par exemple une densité supérieure à 1,2. Le procédé selon l'invention permet de traiter une grande variété de solutions contenant des matières dissoutes.

Ainsi, avantageusement, la solution aqueuse contenant des matières dissoutes peut être choisie parmi l'eau de mer ; les eaux saumâtres ; les lixiviats de décharges publiques ; les eaux de production pétrolière ; les eaux d'extraction du gaz de schiste par la technique de fracturation hydraulique; les liquides de l'industrie agroalimentaire tels que les jus de fruits ou le café, les liquides de l'industrie pharmaceutiques ; les liquides de l'industrie chimique ; les effluents miniers, par exemple les rejets miniers chargés en sulfates, phosphates ou carbonates ; les effluents de l'industrie métallurgique ; les effluents de l'industrie nucléaire ; les concentrâts d'osmose inverse ; les solutions entartrantes ; les effluents de l'industrie papetière ; les aquifères salins.

Le procédé selon l'invention permet de traiter des solutions aqueuses avec une large gamme de concentrations, et notamment des solutions aqueuses avec des teneurs élevées en matières dissoutes qui ne peuvent pas être traitées par les techniques membranaires.

Ainsi, avantageusement, la solution aqueuse traitée (contenue dans le réacteur) a une concentration en matières dissoutes de 5 g/L à la limite de saturation de ces matières dissoutes dans l'eau, de préférence de 20 g/L à la limite de saturation de ces matières dissoutes dans l'eau.

Selon l'invention, une molécule hôte qui permet de cristalliser des clathrates hydrates à pression atmosphérique à des températures supérieures à celle de la cristallisation de la glace est dans la solution aqueuse refroidie contenue dans le réacteur pour cristalliser le clathrate hydrate.

Avantageusement, la molécule hôte est immiscible dans l'eau.

Avantageusement, la molécule hôte est choisie parmi les molécules qui forment un clathrate hydrate ayant une densité inférieure à 1,3, de préférence inférieure à 1,2.

En effet, les solutions concentrées en matières dissoutes peuvent avoir des densités allant généralement de 1,2 à 1,3.

De préférence, la molécule hôte est le cyclopentane ou le cyclohexane.

En effet, le clathrate hydrate de cyclopentane associe 17 molécules d'eau par molécule de cyclopentane dans la structure [C₅H₁₀].17H₂O.

Le cyclopentane permet de cristalliser des clathrates hydrates sous pression atmosphérique à des températures supérieures à la température de cristallisation de la glace, puisque le clathrate hydrate de cyclopentane présente une température de cristallisation (ou température d'équilibre) d'environ 7°C en présence d'eau pure.

Le cyclopentane est à l'état liquide dans les conditions normales. Il est immiscible dans l'eau et permet de cristalliser des clathrates hydrates de densité inférieure à celle de l'eau, car le clathrate hydrate de cyclopentane a une densité de 0,95.

L'ajout de la molécule hôte dans la solution refroidie contenue dans le réacteur peut être effectué par toute technologie, qui permet une bonne dispersion de cette molécule hôte dans la solution de manière à favoriser une cristallisation homogène du clathrate hydrate dans tout le volume de la solution contenue dans le réacteur.

Avantageusement lors de l'étape b), la molécule hôte est introduite dans le réacteur sous la forme d'une émulsion ou solution préparée en mélangeant la solution aqueuse refroidie à la température T1 et les molécules hôtes séparées dans l'étape h).

Avantageusement lors de l'étape c), puisque le clathrate hydrate est moins dense que la solution aqueuse contenue dans le décanteur, on tire profit de cette faible densité des cristaux de clathrates hydrates, et on sépare, de préférence en continu, la suspension de clathrates hydrates cristallisés sous forme de sorbet (hydrate cristallisé dans une solution concentrée) dans une solution aqueuse concentrée en matières dissoutes et exempte de matières dissoutes cristallisées ou précipitées, en surface de la solution aqueuse concentrée.

Lors de l'étape g) réalisée dans un réacteur de dissociation, les clathrates hydrates se dissocient en eau purifiée et en molécules hôtes.

Généralement, cette dissociation des cristaux d'hydrate cristallisés en milieu concentré est réalisée par une augmentation de température conduisant à leur fusion. Autrement dit, les cristaux d'hydrate cristallisés en milieu concentré sont fondus.

Avantageusement, lors de l'étape h), l'eau purifiée et les molécules hôtes sont séparées par décantation ou dégazage.

Le choix de l'une ou l'autre des techniques de décantation ou de dégazage est fait selon la nature plus ou moins volatile de la molécule hôte.

Dans le cas du cyclopentane, on préfère le récupérer par décantation.

Avantageusement, les clathrates hydrates solides séparés dans l'étape f) peuvent être lavés préalablement à l'étape g).

En effet, suivant le niveau de pureté souhaité de l'eau produit par le procédé, une étape de lavage des clathrates hydrates peut être réalisée en amont de l'étape de dissociation, par exemple de fonte g), par exemple lors de l'étape f).

Ce lavage pourra être réalisé par toute solution avec une teneur en matière dissoute inférieure à la phase liquide du sorbet.

En fonction du niveau de pureté désiré, la solution de lavage pourra être une partie de l'eau de dissociation, fusion obtenue dans un cycle précédent du procédé, une quantité donnée de la solution initiale à traiter dans un cycle suivant ou un mélange des deux.

Après l'étape de dissociation, fusion g), la fraction de molécule hôte récupérée dans l'étape h), peut être réintroduite en amont du cycle de cristallisation suivant.

Avantageusement, la température de la solution aqueuse dans le réacteur et/ou la concentration en molécules hôtes dans le réacteur et/ou le décanteur, et/ou la quantité de solution aqueuse concentrée en matières dissoutes et exempte de clathrates hydrates soutirée dans l'étape d), et renvoyée dans le réacteur lors de l'étape e) peuvent être réglées afin d'obtenir dans le décanteur lors de l'étape c), outre une suspension de clathrates hydrates cristallisés sous forme de sorbet, soit seulement une solution aqueuse concentrée en matières dissoutes présentant une concentration déterminée, soit une solution aqueuse concentrée en matières dissoutes présentant une concentration déterminée et une suspension sursaturée contenant des matières dissoutes cristallisées ou précipitées dans une solution aqueuse concentrée en matières dissoutes (on est alors à l'eutectique).

De préférence, la température de la solution aqueuse dans le réacteur et/ou la concentration en molécules hôtes dans le réacteur et/ou le décanteur, et/ou la quantité de solution aqueuse concentrée en matières dissoutes et exempte de clathrates hydrates soutirée dans l'étape d), et renvoyée dans le réacteur lors de l'étape e), peuvent être réglées de façon à ce que des conditions eutectiques règnent dans le réacteur et/ou le décanteur, et que l'on obtienne alors dans le décanteur lors de l'étape c), outre une suspension de clathrates hydrates cristallisés sous forme de sorbet, une solution aqueuse concentrée en matières dissoutes à la concentration eutectique et une suspension sursaturée contenant des matières dissoutes cristallisées ou précipitées dans une solution aqueuse concentrée en matières dissoutes à la concentration eutectique.

Cette suspension sursaturée contenant des matières dissoutes cristallisées ou précipitées dans une solution aqueuse par exemple à la concentration eutectique est soutirée dans l'étape d), et peut être traitée dans une étape de séparation solide-liquide par exemple une étape de filtration, moyennant quoi on obtient d'une part des matières dissoutes cristallisées ou précipitées, qui sont récupérées, et on obtient d'autre part une solution aqueuse concentrée en matières dissoutes, par exemple à la concentration eutectique, qui est recyclée dans le réacteur après avoir été éventuellement refroidie, et/ou récupérée et/ou rejetée en totalité ou en partie, par exemple par l'intermédiaire d'une purge.

En effet, suivant leur composition, destination, les matières dissoutes peuvent être récupérées et valorisées sous différentes formes.

La forme de récupération *a priori* la plus simple est de les récupérer sous forme de solution liquide très concentrée.

L'obtention d'une telle solution s'obtient en adaptant la quantité de clathrate hydrate cristallisée. Plus la quantité de clathrate hydrate cristallisé sera importante, plus la solution sera concentrée. Les deux paramètres permettant de maîtriser cette concentration seront donc indirectement la température du milieu et la quantité de molécule hôte :
- plus la solution se concentrera, plus il sera nécessaire de baisser la température pour rester dans le domaine thermodynamique de cristallisation du clathrate hydrate ;
- pour continuer à cristalliser le clathrate hydrate au fur et à mesure que la solution de cristallisation se concentre et est refroidie, il convient d'alimenter le milieu réactionnel en molécule hôte ;
- le concentrât liquide pourra être extrait par l'intermédiaire d'une purge en bas du décanteur.

Si les conditions thermodynamiques de cristallisation du clathrate hydrate sont maintenues, le niveau de concentration de ce concentrât sera d'autant plus élevé que le débit relatif de cette purge par rapport au débit d'entrée de solution à traiter sera faible.

La seconde forme de valorisation de tout ou partie des matières dissoutes est sous forme solide. Les différentes matières dissoutes, notamment les sels, peuvent en effet cristalliser ou précipiter si les conditions eutectiques (température et concentration) qui leur sont propres sont atteintes. En adaptant la température du procédé et en cristallisant une quantité suffisante de clathrate, les matières dissoutes vont cristalliser ou précipiter au coeur de la solution par sursaturation par rapport à la concentration eutectique. Les matières dissoutes, telles que des sels, cristallisées ou précipitées ayant des densités généralement bien supérieures à celle de la solution, ces matières dissoutes telles que des sels auront tendance à décanter dans le décanteur pour se concentrer au fond du décanteur. Simultanément, les hydrates, qui ont quant à eux généralement une densité inférieure à la solution flottent à la surface de celle-ci.

En d'autres termes, on réalise une séparation densimétrique des matières dissoutes, telles que des sels, et des hydrates. Par exemple, la densité de la solution peut être d'environ 1,2 pour une solution sursaturée en NaCl, la densité des hydrates de cyclopentane peut être d'environ 0,95 et les hydrates flottent, et la densité des sels de NaCl peut être d'environ 2 et les cristaux ou précipités de sel coulent.

Une fois décantées, les matières dissoutes telles que les sels peuvent être récoltées au fond du décanteur sous la forme d'une solution sursaturée contenant des matières dissoutes solides cristallisées ou précipitées dans une solution aqueuse à la concentration eutectique. Les matières dissoutes solides cristallisées ou précipitées peuvent ensuite être séparées de la solution aqueuse à la concentration eutectique concentrée par toute technologie adaptée de séparation liquide/solide.

La phase liquide à la concentration eutectique peut quant à elle être potentiellement recyclée dans le réacteur et/ou rejetée, et/ou récupérée en totalité ou partie par exemple par l'intermédiaire, d'une purge liquide de concentrât.

Enfin, avantageusement, on peut introduire en outre des germes de matières dissoutes solides dans le décanteur, notamment lorsque la solution concentrée en matières dissoutes atteindra pour la première fois la concentration eutectique.

En d'autres termes selon la nature des matières dissoutes, telles que des sels, il peut être avantageux d'ensemencer la solution pour favoriser leur cristallisation ou précipitation ou leur décantation.

L'invention concerne, en outre, une Installation pour la mise en oeuvre du procédé tel que décrit dans ce qui précède, pour traiter une solution aqueuse contenant des matières dissoutes susceptibles de cristalliser ou de précipiter par cristallisation de clathrates hydrates d'une molécule hôte qui cristallisent à la pression atmosphérique à des températures supérieures à la température de cristallisation de la glace, lesdits clathrates hydrates étant moins denses que ladite solution aqueuse contenant des matières dissoutes, ladite installation comprenant :
a) des premiers moyens de refroidissement, tels qu'un échangeur thermique, pour refroidir la solution aqueuse à une température T1 supérieure à la température de cristallisation de la glace et inférieure à la température de cristallisation Teq des clathrates hydrates ;
b) un réacteur isolé thermiquement ;
c) des moyens, tels qu'un canalisation, pour acheminer la solution aqueuse refroidie à la température T1 depuis les premier moyens de refroidissement jusque dans le réacteur isolé thermiquement ;
d) des moyens pour ajouter une molécule hôte dans le réacteur, moyennant quoi les clathrates hydrates de la molécule hôte cristallisent de manière homogène dans l'ensemble du volume de la solution aqueuse en formant une suspension de clathrates hydrates cristallisés dans une solution aqueuse concentrée en matières dissoutes pouvant éventuellement contenir en outre des matières dissoutes cristallisées ou précipitées ;
e) un décanteur ;
f) des moyens pour prélever dans le réacteur une suspension de clathrates hydrates cristallisés dans une solution aqueuse concentrée en matières dissoutes pouvant éventuellement contenir en outre des matières dissoutes cristallisées ou précipitées et des moyens, tel qu'un canalisation, pour envoyer ladite suspension dans le décanteur où ladite suspension est séparée en une solution aqueuse concentrée en matières dissoutes et exempte de clathrates hydrates, en une suspension de clathrates hydrates cristallisés sous forme de sorbet dans une solution concentrée en matières dissoutes et exempte de matières dissoutes cristallisées ou précipitées, et éventuellement en une suspension sursaturée contenant des matières dissoutes cristallisées ou précipitées et exempte de clathrates hydrates dans une solution aqueuse concentrée en matières dissoutes ;
g) des moyens pour soutirer à partir du décanteur la solution aqueuse concentrée en matières dissoutes et exempte de clathrates hydrates, et éventuellement la suspension sursaturée contenant des matières dissoutes cristallisées ou précipitées et exempte de clathrates hydrates ;
h) des moyens, tels qu'une canalisation, pour renvoyer en totalité ou en partie dans le réacteur la solution aqueuse concentrée en matières dissoutes et exempte de clathrates hydrates soutirée dans le décanteur ;
i) éventuellement, des seconds moyens de refroidissement, tel qu'un échangeur thermique, pour refroidir avant le réacteur la solution aqueuse concentrée en matières dissoutes et exempte de clathrates hydrates soutirée dans le décanteur prévus dans les moyens, tels qu'une canalisation, pour renvoyer en totalité ou en partie dans le réacteur la solution aqueuse concentrée en matières dissoutes et exempte de clathrates hydrates soutirée dans le décanteur ;
j) éventuellement des moyens de purge prévus dans le décanteur pour récupérer et/ou rejeter une autre partie de la solution aqueuse concentrée en matières dissoutes et exempte de clathrates hydrates soutirée dans le décanteur ;
k) des premiers moyens de séparation liquide/solide tels qu'un filtre ;
l) des moyens , tels qu'une canalisation pour envoyer la suspension de clathrates hydrates cristallisée sous forme de sorbet dans une solution aqueuse concentrée en matières dissoutes et exempte de matières dissoutes cristallisées ou précipitées séparée dans le décanteur dans les premiers moyens de séparation liquide/solide tel qu'un filtre où des clathrates hydrates solides sont séparés de la solution aqueuse concentrée en matières dissoutes et exempte de matières dissoutes cristallisées ou précipitées formant un filtrat ;
m) des moyens tels qu'une canalisation pour recycler ledit filtrat dans lesdits premiers moyens de refroidissement ;
n) un réacteur de dissociation des clathrates hydrates solides séparés dans lesdits premiers moyens de séparation liquide/solide, dans lequel les clathrates hydrates solides se dissocient en eau purifiée et en molécules hôtes ;
o) des moyens pour séparer l'eau purifiée et les molécules hôtes obtenues le réacteur de dissociation, des moyens pour récupérer l'eau purifiée, et des moyens, tels qu'une canalisation, pour renvoyer les molécules hôtes dans le réacteur.

Avantageusement, l'installation peut comprendre des moyens, tels qu'un émulseur, pour préparer une émulsion ou solution en mélangeant la solution aqueuse refroidie à la température T1 dans les premiers moyens de refroidissement et les molécules hôtes, et des moyens pour introduire ladite émulsion ou solution dans le réacteur.

Avantageusement, l'Installation peut comprendre en outre des moyens, pour laver les clathrates hydrates solides séparés dans les premiers moyens de séparation liquide/solide.

Avantageusement, l'installation peut comprendre en outre des seconds moyens de séparation solide/liquide, tels qu'un filtre, pour traiter la suspension sursaturée contenant des matières dissoutes cristallisées ou précipitées dans une solution aqueuse soutirée dans le décanteur et obtenir d'une part des matières dissoutes cristallisées ou précipitées, et d'autre part une solution aqueuse concentrée en matières dissoutes.

Avantageusement, l'Installation peut comprendre, en outre, des moyens pour recycler dans le réacteur la solution aqueuse concentrée en matières dissoutes obtenue dans les seconds moyens de séparation solide/liquide.

Avantageusement, l'installation peut comprendre, en outre, des troisièmes moyens de refroidissement de préférence confondus avec les seconds moyens de refroidissement, tel qu'un échangeur thermique, pour refroidir avant le réacteur la solution aqueuse concentrée en matières dissoutes.

Avantageusement, l'installation peut comprendre en outre des moyens pour introduire des germes de matières dissoutes solides dans le décanteur.

L'invention sera mieux comprise à la lecture de la description détaillée qui suit, donnée à titre illustratif et non limitatif.

Cette description détaillée de l'invention concerne notamment des modes de réalisation particuliers et est faite en relation avec les dessins joints.

### BRÈVE DESCRIPTION DES DESSINS

- La Figure 1 est un diagramme de phase pour une solution aqueuse d'un sel tel que le NaCl.
   Ce diagramme montre que la température de formation de la glace pure est de 0°C et que le point eutectique pour une solution de NaCl se situe à une température de -21°C et à une concentration en NaCl de 23% en masse.
   En abscisse est portée la concentration en sel (en % en masse) et en ordonnée est portée la température de la solution (en °C).
- La Figure 2 est un diagramme de phase pour une solution aqueuse d'un sel tel que le NaCl contenant des molécules hôtes, notamment des molécules hôtes gazeuses qui forment des clathrates hydrates.
   Ce diagramme montre que la température de congélation des clathrates hydrates est de 7°C, et que le point eutectique pour une solution de NaCl se situe à une température supérieure à -21°C, à savoir 13°C.
   En abscisse est portée la concentration en sel (en % en masse) et en ordonnée est portée la température de la solution (en °C).

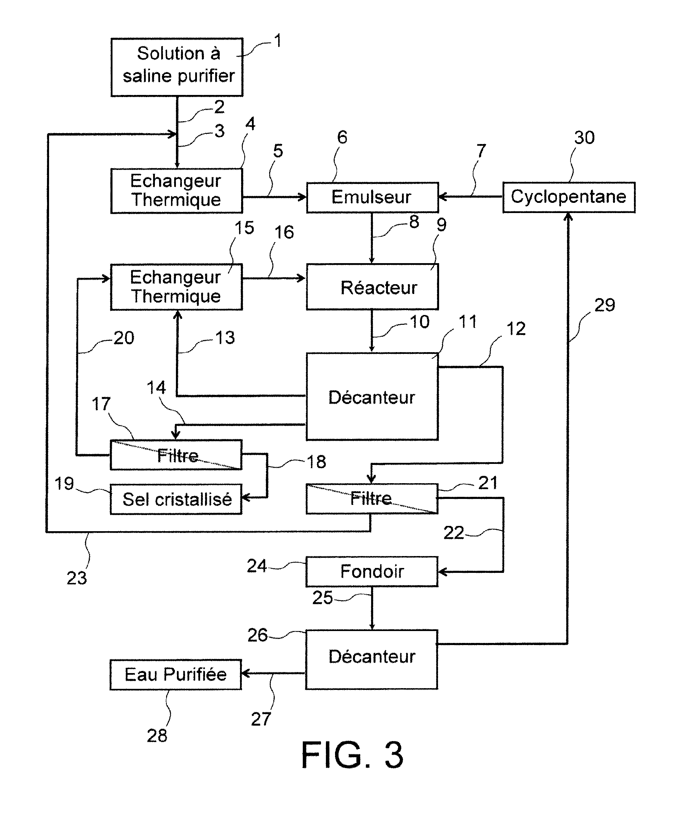

- La Figure 3 est un schéma (« *flow-sheet* ») d'une forme de réalisation préférée du procédé selon l'invention, mis en oeuvre en continu.

### EXPOSÉ DÉTAILLÉ DE MODES DE RÉALISATION PARTICULIERS

La Figure 3 illustre une forme de réalisation préférée du procédé selon l'invention, mis en oeuvre en continu, pour purifier par exemple une solution saline de NaCl, par exemple à 35 g/l, soit une teneur assimilable à celle de l'eau de mer.

Il est bien évident que cette solution saline n'est donnée qu'à titre d'exemple et que le procédé illustré sur la figure 3 peut être utilisé pour purifier toute solution aqueuse contenant des matières dissoutes susceptibles de cristalliser.

La solution saline à purifier (1) forme un flux (2) qui est rejoint par un flux de solution concentrée en sel (flux 23) pour former ainsi un flux (3) qui est envoyé dans un échangeur thermique (4) où il est refroidi à une température de l'ordre de -15°C sans générer de glace, du fait de sa teneur élevée en sel.

Le flux refroidi (5), passe à travers un émulseur (6) où il est mélangé finement avec une molécule hôte, par exemple 4% de cyclopentane sous forme liquide à 0°C (flux 7).

L'émulsion issue de l'émulseur (flux 8) rejoint un réacteur (9) dans lequel cristallise l'hydrate de cyclopentane provoquant par la même une sursaturation en sel de la solution.

Il est bien évident que le cyclopentane n'est donné qu'à titre d'exemple et que le procédé illustré sur la figure 3 peut être mis en oeuvre avec toute molécule hôte.

Un flux (10) constitué d'hydrate de cyclopentane et de la solution sursaturée en sel est prélevé dans le réacteur (9) et est envoyé dans un décanteur (11).

Le flux (10) se stabilise dans le décanteur (11), où l'hydrate de cyclopentane va surnager car sa densité est plus faible que la densité de la solution, et où la solution saline va atteindre sa concentration d'équilibre eutectique par cristallisation du sel. Les cristaux de sel d'une densité supérieure à celle de la solution vont décanter en bas du décanteur.

Trois flux sont alors soutirés du décanteur (11), à savoir :
- un flux (12) soutiré dans la partie supérieure du décanteur (11). Ce flux (12) est un sorbet d'hydrate de cyclopentane composé d'hydrate de cyclopentane et de solution saline à la concentration eutectique mais exempt de tout cristal de sel ou de sel précipité,
- un flux (13), prélevé dans la partie médiane du décanteur. Ce flux (13) est constitué de solution saline à la concentration eutectique,
- un flux (14), prélevé en bas du décanteur (11), est constitué de solution saline à la concentration eutectique et de cristaux de sels ou de sels précipités décantés mais exempt de tout cristal d'hydrate de cyclopentane.

Le flux (13) rejoint alors un second échangeur thermique (15) pour être refroidi vers -19°C avant d'être réintroduit en amont dans le réacteur (9) sous la forme d'un flux (16).

Le flux (14) est filtré dans un filtre (17). Cette opération de filtration permet d'une part d'obtenir un flux (18) de sels cristallisés ou précipités qui sont récupérés (19), alors que le jus de filtration ou filtrat à la concentration eutectique forme un flux (20) qui est réinjecté dans le même échangeur thermique (15) que lé flux (13).

Le flux (12) est également filtré dans un filtre (21) pour récupérer les cristaux d'hydrate de cyclopentane du sorbet sous forme d'un flux (22). Le jus de filtration (23), également à la concentration eutectique, issu de cette opération de filtration, est quant à lui réintroduit en amont du procédé pour être mélangé au flux (2) de solution à purifier avant refroidissement dans l'échangeur (4).

L'hydrate de cyclopentane constituant le flux (22) est introduit dans un fondoir (24) où il va se dissocier pour donner une émulsion de cyclopentane et d'eau purifiée (flux 25)

Cette émulsion (flux 25) est alors introduite dans un décanteur (26) pour séparer l'eau purifiée du cyclopentane.

Compte tenu de la densité de 0,75 du cyclopentane, on soutire dans la partie basse du décanteur (26) un flux (27) d'eau purifiée qui est récupéré (28) alors qu'en partie haute du décanteur (26), on soutire un flux de cyclopentane (29).

Ce flux de cyclopentane (29) est recyclé en amont du procédé pour former avec un apport éventuel de cyclopentane frais (30), le flux (7), qui alimente l'émulseur (6).

L'invention va maintenant être décrite en relation avec l'exemple suivant, donné à titre illustratif et non limitatif.

### Exemple.

Dans cet exemple, on réalise le traitement par le procédé selon l'invention d'une solution de NaCl à 30 g/L à raison de 10 m³/jour.

Le procédé est tel que décrit sur la Figure 3, il est mis en oeuvre dans une installation permettant de traiter 10 m³ de solution/jour et avec du cyclopentane en tant que molécule-hôte.

Le Tableau I qui suit donne pour les flux identifiés par des numéros correspondant aux signes de référence portés sur la Figure 3, le débit en 10 Kg/h, la teneur en sel en % massique, la teneur en eau en % massique, la teneur en cyclopentane en % massique, et la teneur en hydrate en % massique.

**Tableau 1**

| **Numéro Flux** | **Débit en 10kg/h** | **Teneur en sel %** | **Teneur en eau %** | **Cyclopentane %** | **Teneur en hydrate %** |
|---|---|---|---|---|---|
| **2** | **41,67** | **3,1** | **96,9** | **0** | **0** |
| **3** | 210 | 21,4 | 78,6 | 0 | 0 |
| **5** | 210 | 21,4 | 78,6 | 0 | 0 |
| **7** | 8 | 0 | 0 | 100 | 0 |
| **8** | 218 | 20 | 76 | 4 | 0 |
| **10** | 753 | 23,7 | 70,5 | 0 | 5,8 |
| **12** | 216 | 20 | 59,9 | 0 | 20 |
| **13** | 537 | 23,5 | 76,5 | 0 | 0 |
| **14** | 2,2 | 50,7 | 49,3 | 0 | 0 |
| **16** | 538 | 23,5 | 76,5 | 0 | 0 |
| **18** | **0,8** | **100** | **0** | **0** | **0** |
| **20** | 1,4 | 23,5 | 76,5 | 0 | 0 |
| **22** | 47,4 | 0,1 | 9 | 0 | 90,9 |
| **25** | 47,7 | 0,1 | 83 | 16,8 | 0 |
| **27** | **39,4** | **0,1** | **99,9** | **0** | **0** |
| **29** | 8 | 0 | 0 | 100 | 0 |

Rappelons que :
- Le flux (2) correspond à la solution à traiter.
- Le flux (18) correspond aux sels cristallisés.
- Le flux (27) correspond à l'eau purifiée.

## Revendications

1. Procédé de traitement d'une solution aqueuse contenant des matières dissoutes susceptibles de cristalliser ou de précipiter, par cristallisation de clathrates hydrates d'une molécule hôte qui cristallisent à la pression atmosphérique à des températures supérieures à la température de cristallisation de la glace, lesdits clathrates hydrates étant moins denses que ladite solution aqueuse contenant des matières dissoutes, dans lequel on réalise les étapes suivantes :
a) on refroidit la solution aqueuse à une température T1 supérieure à la température de cristallisation de la glace et inférieure à la température de cristallisation Teq des clathrates hydrates, et on introduit cette solution aqueuse refroidie dans un réacteur isolé thermiquement ;
b) on ajoute dans le réacteur contenant la solution aqueuse refroidie, une quantité de la molécule hôte telle que la température T2 de la solution aqueuse reste, suite à cette addition et au dégagement exothermique du à la cristallisation des clathrates hydrates, inférieure à la température Teq, moyennant quoi les clathrates hydrates de la molécule hôte cristallisent de manière homogène dans l'ensemble du volume de la solution aqueuse aqueuse en formant une suspension de clathrates hydrates cristallisés dans une solution aqueuse concentrée en matières dissoutes pouvant éventuellement contenir en outre des matières dissoutes cristallisées ou précipitées ;
c) on prélève dans le réacteur la suspension formée lors de l'étape b), et on envoie ladite suspension dans un décanteur où elle est séparée en une solution aqueuse concentrée en matières dissoutes et exempte de clathrates hydrates, en une suspension de clathrates hydrates cristallisés sous forme de sorbet dans une solution aqueuse concentrée en matières dissoutes et exempte de matières dissoutes cristallisées ou précipitées, et éventuellement en une suspension sursaturée contenant des matières dissoutes cristallisées ou précipitées et exempte de clathrates hydrates dans une solution aqueuse concentrée en matières dissoutes ;
d) on soutire à partir du décanteur d'une part la solution aqueuse concentrée en matières dissoutes et exempte de clathrates hydrates, et éventuellement d'autre part, la suspension sursaturée contenant des matières dissoutes cristallisées ou précipitées et exempte de clathrates hydrates ;
e) la solution aqueuse concentrée en matières dissoutes et exempte de clathrates hydrates soutirée dans l'étape d), est renvoyée en totalité dans le réacteur après avoir été éventuellement refroidie ; ou bien, s'il n'existe pas dans le décanteur de suspension sursaturée alors une partie de la solution aqueuse concentrée en matières dissoutes et exempte de clathrates hydrates soutirée dans l'étape d), est renvoyée dans le réacteur après avoir été éventuellement refroidie, et une autre partie de la solution aqueuse concentrée en matières dissoutes et exempte de clathrates hydrates soutirée dans l'étape d), est récupérée et/ou rejetée par l'intermédiaire d'une purge ;
f) la suspension de clathrates hydrates cristallisés sous forme de sorbet dans une solution aqueuse concentrée en matières dissoutes et exempte de matières dissoutes cristallisées ou précipitées obtenue dans l'étape c), est envoyée dans un appareil de séparation liquide/solide, tel qu'un filtre, où des clathrates hydrates solides sont séparés de la solution aqueuse concentrée en matières dissoutes et exempte de matières dissoutes cristallisées ou précipitées qui est recyclée pour former au moins une partie de la solution aqueuse refroidie dans l'étape a) ;
g) on envoie les clathrates hydrates solides séparés dans l'étape f) dans un réacteur de dissociation des clathrates hydrates dans lequel les clathrates hydrates se dissocient en eau purifiée et en molécules hôtes ;
h) l'eau purifiée et les molécules hôtes obtenues dans l'étape g) sont séparées, l'eau purifiée est récupérée et les molécules hôtes sont recyclées dans l'étape b).

2. Procédé selon la revendication 1, qui est réalisé en continu.

3. Procédé selon la revendication 1 ou 2, dans lequel les matières dissoutes susceptibles de cristalliser ou de précipiter sont choisies parmi les sels minéraux tels que NaCl, les sels organiques, et les composés solubles dans l'eau présentant un eutectique de cristallisation en solution aqueuse, et ayant de préférence une densité supérieure à celle de la solution aqueuse contenant des matières dissoutes traitée, par exemple une densité supérieure à 1,2.

4. Procédé selon l'une quelconque des revendications précédentes, dans lequel la solution aqueuse contenant des matières dissoutes est choisie parmi l'eau de mer ; les eaux saumâtres ; les lixiviats de décharges publiques ; les eaux de production pétrolière; les eaux d'extraction du gaz de schiste par la technique de fracturation hydraulique ; les liquides de l'industrie agroalimentaire tels que les jus dé fruits ou le café, les liquides de l'industrie pharmaceutiques ; les liquides de l'industrie chimique ; les effluents miniers, par exemple les rejets miniers chargés en sulfates, phosphates ou carbonates ; les effluents de l'industrie métallurgique; les effluents de l'industrie nucléaire ; les concentrâts d'osmose inverse ; les solutions entartrantes ; les effluents de l'industrie papetière ; les aquifères salins.

5. Procédé selon l'une quelconque des revendications précédentes, dans lequel la solution aqueuse traitée a une concentration en matières dissoutes de 5 g/L à la limite de saturation de ces matières dissoutes dans l'eau, de préférence de 20 g/L à la limite de saturation de ces matières dissoutes dans l'eau.

6. Procédé selon l'une quelconque des revendications précédentes, dans lequel la molécule-hôte est immiscible dans l'eau.

7. Procédé selon l'une quelconque des revendications précédentes, dans lequel la molécule hôte est choisie parmi les molécules qui forment un clathrate hydrate ayant une densité inférieure à 1,3, de préférence inférieure à 1,2.

8. Procédé selon l'une quelconque des revendications précédentes, dans lequel la molécule hôte est le cyclopentane ou le cyclohexane.

9. Procédé selon l'une quelconque des revendications précédentes, dans lequel lors de l'étape b), la molécule hôte est introduite dans le réacteur sous la forme d'une émulsion ou solution préparée en mélangeant la solution aqueuse refroidie à la température T1 et les molécules hôtes séparées dans l'étape h).

10. Procédé selon l'une quelconque des revendications précédentes, dans lequel, lors de l'étape c), on sépare, de préférence en continu, la suspension de clathrates hydrates cristallisés sous forme de sorbet dans une solution aqueuse concentrée en matières dissoutes et exempte de matières dissoutes cristallisées ou précipitées, en surface de la solution aqueuse concentrée.

11. Procédé selon l'une quelconque des revendications précédentes, dans lequel, lors de l'étape h) l'eau purifiée et les molécules hôtes sont séparées par décantation ou dégazage.

12. Procédé selon l'une quelconque des revendications précédentes, dans lequel les clathrates hydrates solides séparés dans l'étape f) sont lavés préalablement à l'étape g).

13. Procédé selon l'une quelconque des revendications précédentes, dans lequel la température de la solution aqueuse dans le réacteur et/ou la concentration en molécules hôtes dans le réacteur et/ou le décanteur et/ou la quantité de solution aqueuse concentrée en matières dissoutes et exempte de clathrates hydrates soutirée dans l'étape d), et renvoyée dans le réacteur lors de l'étape e) sont réglées afin d'obtenir dans le décanteur lors de l'étape c), outre une suspension de clathrates hydrates cristallisés sous forme de sorbet, soit seulement une solution aqueuse concentrée en matières dissoutes présentant une concentration déterminée, soit une solution aqueuse concentrée en matières dissoutes présentant une concentration déterminée et une suspension sursaturée contenant des matières dissoutes cristallisées ou précipitées dans une solution aqueuse concentrée en matières dissoutes.

14. Procédé selon la revendication 13, dans lequel la température de la solution aqueuse dans le réacteur et/ou la concentration en molécules hôtes dans le réacteur et/ou le décanteur et/ou la quantité de solution aqueuse concentrée en matières dissoutes et exempte de clathrates hydrates soutirée dans l'étape d), et renvoyée dans le réacteur lors de l'étape e) sont réglées de façon à ce que des conditions eutectiques règnent dans le réacteur et/ou le décanteur, et que l'on obtienne alors dans le décanteur lors de l'étape c), outre une suspension de clathrates hydrates cristallisés sous forme de sorbet, une solution aqueuse concentrée en matières dissoutes à la concentration eutectique et une suspension sursaturée contenant des matières dissoutes cristallisées ou précipitées dans une solution aqueuse concentrée en matières dissoutes à la concentration eutectique.

15. Procédé selon l'une quelconque des revendications précédentes, dans lequel la suspension sursaturée contenant des matières dissoutes cristallisées ou précipitées dans une solution aqueuse est soutirée dans l'étape d) et est traitée dans une étape de séparation solide-liquide par exemple une étape de filtration, moyennant quoi on obtient d'une part des matières dissoutes cristallisées ou précipitées, qui sont récupérées, et on obtient d'autre part une solution aqueuse concentrée en matières dissoutes qui est recyclée dans le réacteur après avoir été éventuellement refroidie, et/ou récupérée et/ou rejetée en totalité ou en partie.

16. Procédé selon l'une quelconque des revendications précédentes, dans lequel on introduit en outre des germes de matières dissoutes solides dans le décanteur.

17. Installation pour la mise en oeuvre du procédé selon l'une quelconque des revendications 1 à 16, pour traiter une solution aqueuse contenant des matières dissoutes susceptibles de cristalliser ou de précipiter par cristallisation de clathrates hydrates d'une molécule hôte qui cristallisent à la pression atmosphérique à des températures supérieures à la température de cristallisation de la glace, lesdits clathrates hydrates étant moins denses que ladite solution aqueuse contenant des matières dissoutes, ladite installation comprenant :
a) des premiers moyens de refroidissement, tels qu'un échangeur thermique, pour refroidir la solution aqueuse à une température T1 supérieure à la température de cristallisation de la glace et inférieure à la température de cristallisation Teq des clathrates hydrates ;
b) un réacteur isolé thermiquement ;
c) des moyens, tels qu'une canalisation, pour acheminer la solution aqueuse refroidie à la température T1 depuis les premiers moyens de refroidissement jusque dans le réacteur isolé thermiquement ;
d) des moyens pour ajouter une molécule hôte dans le réacteur, moyennant quoi les clathrates hydrates de la molécule hôte cristallisent de manière homogène dans l'ensemble du volume de la solution aqueuse en formant une suspension de clathrates hydratés cristallisés dans une solution aqueuse concentrée en matières dissoutes pouvant éventuellement contenir en outre des matières dissoutes cristallisées ou précipitées ;
e) un décanteur ;
f) des moyens pour prélever dans le réacteur une suspension de clathrates hydrates cristallisés dans une solution concentrée en matières dissoutes pouvant éventuellement contenir en outre des matières dissoutes cristallisées ou précipitées et des moyens, tel qu'un canalisation, pour envoyer ladite suspension dans le décanteur où ladite suspension est séparée en une solution aqueuse concentrée en matières dissoutes et exempte de clathrates hydrates, en une suspension de clathrates hydrates cristallisés sous forme de sorbet dans une solution aqueuse concentrée en matières dissoutes et exempte de matières dissoutes cristallisées ou précipitées, et éventuellement en une suspension sursaturée contenant des matières dissoutes cristallisées ou précipitées et exempte de clathrates hydrates dans une solution aqueuse concentrée en matières dissoutes ;
g) des moyens pour soutirer à partir du décanteur la solution aqueuse concentrée en matières dissoutes et exempte de clathrates hydrates, et éventuellement la suspension sursaturée contenant des matières dissoutes cristallisées ou précipitées et exempte de clathrates hydrates ;
h) des moyens, tels qu'une canalisation, pour renvoyer en totalité ou en partie dans le réacteur la solution aqueuse concentrée en matières dissoutes et exempte de clathrates hydrates soutirée dans le décanteur;
i) éventuellement, des seconds moyens de refroidissement, tel qu'un échangeur thermique, pour refroidir avant le réacteur la solution aqueuse concentrée en matières dissoutes et exempte de clathrates hydrates soutirée dans le décanteur prévus dans les moyens, tels qu'une canalisation, pour renvoyer en totalité ou en partie dans le réacteur la solution aqueuse concentrée en matières dissoutes et exempte de clathrates hydrates soutirée dans le décanteur ;
j) éventuellement des moyens de purge prévus dans le décanteur pour récupérer et/ou rejeter une autre partie de la solution aqueuse concentrée en matières dissoutes et exempte de clathrates hydrates soutirée dans le décanteur ;
k) des premiers moyens de séparation liquide/solide tels qu'un filtre ;
l) des moyens , tels qu'une canalisation pour envoyer la suspension de clathrates hydrates cristallisée sous forme de sorbet dans une solution aqueuse concentrée en matières dissoutes et exempte de matières dissoutes cristallisées ou précipitées séparée dans le décanteur dans les premiers moyens de séparation liquide/solide tel qu'un filtre où des clathrates hydrates solides sont séparés de la solution aqueuse concentrée en matières dissoutes et exempte de matières dissoutes cristallisées ou précipitées formant un filtrat ;
m) des moyens tels qu'une canalisation pour recycler ledit filtrat dans lesdits premiers moyens de refroidissement ;
n) un réacteur de dissociation des clathrates hydrates solides séparés dans lesdits premiers moyens de séparation liquide/solide, dans lequel les clathrates hydrates solides se dissocient en eau purifiée et en molécules hôtes;
o) des moyens pour séparer l'eau purifiée et les molécules hôtes obtenues le réacteur de dissociation, des moyens pour récupérer l'eau purifiée, et des moyens, tels qu'une canalisation, pour renvoyer les molécules hôtes dans le réacteur.

18. Installation selon la revendication 17, qui comprend des moyens, tels qu'un émulseur, pour préparer une émulsion ou solution en mélangeant la solution aqueuse refroidie à la température T1 dans les premiers moyens de refroidissement et les molécules hôtes, et des moyens pour introduire ladite émulsion ou solution dans le réacteur.

19. Installation selon la revendication 17 ou 18, qui comprend en outre des moyens, pour laver les clathrates hydrates solides séparés dans les premiers moyens de séparation liquide/solide.

20. Installation selon l'une quelconque des revendications 17 à 19, qui comprend en outre des seconds moyens de séparation solide/liquide, tels qu'un filtre, pour traiter la suspension sursaturée contenant des matières dissoutes cristallisées ou précipitées dans une solution aqueuse soutirée dans le décanteur et obtenir d'une part des matières dissoutes cristallisées ou précipitées, et d'autre part une solution aqueuse concentrée en matières dissoutes.

21. Installation selon la revendication 20, qui comprend en outre des moyens pour recycler dans le réacteur la solution aqueuse concentrée en matières dissoutes obtenue dans les seconds moyens de séparation solide/liquide.

22. Installation selon la revendication 21, qui comprend en outre des troisièmes moyens de refroidissement de préférence confondus avec les seconds moyens de refroidissement, tel qu'un échangeur thermique, pour refroidir avant le réacteur la solution aqueuse concentrée en matières dissoutes.

23. Installation selon l'une quelconque des revendications 17 à 22, qui comprend en outre des moyens pour introduire des germes de matières dissoutes solides dans le décanteur.
